# EUROPEAN PATENT SPECIFICATION

(11) **EP 0 408 465 B1**
(45) Date of publication and mention of the grant of the patent: **02.03.1994**
(21) Application number: 90420283.5
(22) Date of filing: 14.06.1990
(51) Int. Cl.: C08G 18/42, C09D 175/06, C08L 67/02, C08G 63/18

(54) **Novel semi-crystalline polyesters, blends thereof with amorphous polyesters and powder coating compositions based on such blends**
Halbkristalline Polyester, deren Mischungen mit amorphen Polyestern sowie auf solchen Mischungen basierte Pulverlackzusammensetzungen
Polyesters semi-crystallins nouveaux, leurs mélanges avec des polyesters amorphes et compositions de revêtement en poudre basées sur ces mélanges

(30) Priority: 26.06.1989 US 371242
(43) Date of publication of application: 16.01.1991
(73) Proprietor: EASTMAN CHEMICAL COMPANY, Kingsport, TN 37660 (US)
(72) Inventor: Chang, Yeong-Ho, c/o Eastman Kodak Company, Rochester, New York 14650-2201 (US); Jones, Glenn Clark, c/o Eastman Kodak Company, Rochester, New York 14650-2201 (US)
(74) Representative: Behrens, Dieter, Dr.-Ing.

(56) References cited:
- EP-A- 0 070 118
- EP-A- 0 248 658
- WO-A-89/05320
- DE-A- 2 049 538
- FR-A- 2 241 574
- GB-A- 1 043 855
- GB-A- 2 023 625

## Description

This invention concerns novel polymer compositions useful for formulating powder coating compositions. More particularly, this invention concerns novel polymer compositions comprising certain novel semi-crystalline polyesters, certain amorphous polyesters and blocked isocyanates, powder coating compositions based thereon and coatings derived from the powder coating compositions.

Plastic materials used in the manufacture of powder coatings are classified broadly as either thermosetting or thermoplastic. In the application of thermoplastic powder coatings, heat is applied to the coating on the substrate to melt the particles of the powder coating and thereby permit the particles to flow together and form a smooth coating.

Thermosetting coatings, when compared to coatings derived from thermoplastic compositions, generally are tougher, more resistant to solvents and detergents, have better adhesion to metal substrates and do not soften when exposed to elevated temperatures. Thermosetting powder coating compositions are disclosed, e.g. in W089/05320 where polyurethane powder coating compositions comprising at least one amorphous polyester, at least a semi-crystalline polyester and a polyisocyanate crosslinking agent, are used to obtain coatings having a good hardness and flexibility. However, the curing of thermosetting coatings has created problems in obtaining coatings which have, in addition to the above-stated desirable characteristics, good smoothness and flexibility. Coatings prepared from thermosetting powder compositions, upon the application of heat, may cure or set prior to forming a smooth coating, resulting in a relatively rough finish referred to as an "orange peel" surface. Such a coating surface or finish lacks the gloss and luster of coatings typically obtained from thermoplastic compositions. The "orange peel" surface problem has caused thermosetting coatings to be applied from organic solvent systems which are inherently undesirable because of the environmental and safety problems occasioned by the evaporation of the solvent system. Solvent-based coating compositions also suffer from the disadvantage of relatively poor percent utilization, i.e., in some modes of application, only 60 percent or less of the solvent-based coating composition being applied contacts the article or substrate being coated. Thus, a substantial portion of solvent-based coatings can be wasted since that portion which does not contact the article or substrate being coated obviously cannot be reclaimed.

To avoid the "orange peel" surface, the polymeric materials constituting powder coating compositions must melt within a particular temperature range to permit timely and ample flow of the polymeric material prior to the occurrence of any significant degree of curing, i.e., cross-linking. Powder coating compositions which possess the requisite melting range provide smooth and glossy coating upon being heated to cure the compositions. In addition to being smooth and glossy, coatings derived from thermosetting coating compositions should exhibit or possess good impact strength, hardness, resistance to solvents and chemicals and flexibility. For example, good flexibility is essential for powder coating compositions used to coat sheet (coil) steel which is destined to be formed or shaped into articles used in the manufacture of various household appliances and automobiles wherein the sheet metal is flexed or bent at various angles.

It is essential that powder coating compositions remain in a free-flowing, finely divided state for a reasonable period after they are manufactured and packaged. Thus, amorphous polyesters utilized in powder coating formulations desirably possess a glass transition temperature (Tg) higher than the storage temperatures to which the formulations will be exposed. Semi-crystalline polyesters and blends thereof with amorphous polyesters also may be utilized in powder coating formulations. For this application, semi-crystalline polyesters desirably possess a significant degree of crystallinity to prevent caking or sintering of the powder for a reasonable period of time prior to its application to a substrate. Semi-crystalline polyesters used in powder coating formulations also must have melting temperature low enough to permit the compounding of the powder coating formulation without deblocking the blocked polyisocyanate cross-linking agent. The lower melting temperature of the semi-crystalline polyester also is important to achieving good flow of the coating prior to curing and thus aids the production of smooth and glossy coatings.

Finally, semi-crystalline polyesters having the above-described attributes must be capable of being manufactured and converted to powder coating compositions at high speeds. Thus, semi-crystalline polyesters which possess short isothermal crystallization half-times can be manufactured and isolated in automated belt isolation equipment as the polymer crystallizes readily on the belt. Semi-crystalline polyesters which possess high degrees of crystallinity often have short crystallization half-times also. Thus, when semi-crystalline polyesters are compounded with a cross-linking agent and other additives commonly present in powder coating formulations and extruded according to conventional polymer blending procedures, the extrudate must harden in a short period of time to permit it to be granulated and pulverized. Semi-crystalline polyesters therefore must possess sufficiently short crystallization half-times at ambient temperatures to facilitate this hardening process. It is therefore important that semi-crystalline polyesters, to be useful in powder coatings, have short crystallization half-times, high crystallinity and proper melting temperature ranges.

We have discovered that coatings having good to excellent gloss, hardness, impact strength (toughness) and flexibility may be obtained from powder coating compositions comprising an intimate blend, typically in a finely divided form, of:
(1) a blend of polymers containing free hydroxy groups comprised of:
   (A) 10 to 90 weight percent of an amorphous polyester having a glass transition temperature (Tg) of greater than 40°C, a hydroxyl number of 20 to 100 and an inherent viscosity of 0.1 to 0.5; and
   (B) 90 to 10 weight percent of a semi-crystalline polyester having a Tg of less than 50°C, a hydroxyl number of 20 to 100, an inherent viscosity of 0.1 to 0.5, a melting range of 70 to 150°C, a number average molecular weight of 1500 to 10,000 and a heat of fusion (second heating cycle of DSC) of greater than 5 cal/g-°C, e.g. 5 to 20 cal/g-°C and comprised of:
      (i) diacid residues comprised of (a) 80 to 98 mole percent terephthalic acid residues and (b) 2 to 20 mole percent of 1,4-cyclohexanedicarboxylic acid residues, 1,3-cyclohexanedicarboxylic acid residues, adipic acid residues or a mixture thereof; and
      (ii) diol residues comprised of at least 50 mole percent of residues having the formula -O-(CH₂)ₙ-O- wherein n is 4 to 12; and
(2) a cross-linking effective amount of a blocked polyisocyanate compound.

We have discovered that the above-described semi-crystalline polyester imparts to the thermosetting powder coating composition a favorable balance of melting range and short crystallization half time. The compositions may be formulated according to conventional procedures and rapidly converted to a finely divided powder which possesses good storage stability.

Both the amorphous polyester and the semi-crystalline polyester may be produced using well-known polycondensation procedures employing an excess of glycol to obtain a polymer having the specified hydroxyl number. The glycol residues of the amorphous polyester component may be derived from a wide variety and number of aliphatic, alicyclic and alicyclic-aromatic glycols or diols containing from 2 to 10 carbon atoms. Examples of such glycols include ethylene glycol, propylene glycol, 1,3-propanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, thiodiethanol, 1,2-, 1,3- and 1,4-cyclohexanedimethanol, 2,2,4,4-tetramethyl-1,3-cyclobutanediol, 1,4-xylylenediol and the like.

The dicarboxylic acid residues of the amorphous polyester may be derived from various aliphatic, alicyclic, aliphatic-alicyclic and aromatic dicarboxylic acids containing 4 to 10 carbon atoms or ester-forming derivatives thereof such as dialkyl esters and/or anhydrides. Succinic, glutaric, adipic, azelaic, sebacic, fumaric, maleic, itaconic, 1,3- and 1,4-cyclohexanedicarboxylic, phthalic, isophthalic and terephthalic are representative of the dicarboxylic acids from which the diacid residues of the amorphous polyester may be derived. A minor amount, e.g., up to 10 mole percent, of the glycol and/or diacid residues may be replaced with branching agents, e.g., trifunctional residues derived from trimethylolethane, trimethylolpropane and trimellitic anhydride.

The preferred amorphous polyester component of the composition provided by this invention has a Tg greater than 55°C, e.g., from 55 to 80°C, a hydroxyl number in the range of 25 to 80, an acid number of not more than 15 and an inherent viscosity of 0.15 to 0.4. As used herein, the term "amorphous" refers to a polyester which exhibits no, or only a trace of, crystallization or melting point as determined by differential scanning calorimetry (DSC). The amorphous polyester component preferably is comprised of (1) diacid residues of which at least 50 mole percent are terephthalic acid residues, (2) glycol residues of which at least 50 mole percent are derived from 2,2-dimethyl-1,3-propanediol (neopentyl glycol) and (3) up to 10 mole percent, based on the total moles of (2) and (3), of trimethylolpropane residues. These preferred amorphous polyesters are commerciallu available, e.g., under the mames RUCOTE® 107, AZS 50® Resin and Cargill Resin 3000®, and/or can be prepared according to the procedures described in U.S. Patents 3,296,211, 3,842,021, 4,124,570 and 4,264,751 and Published Japanese Patent Applications (Kokai) 73-05,895 and 73-26,292. The most preferred amorphous polyester consists essentially of terephthalic acid residues, 2,2-dimethyl-1,3-propanediol residues and up to 10 mole percent, based on the total moles of trimethylolpropane and 2,2-dimethyl-1,3-propanediol residues, of trimethylolpropane residues and having a Tg of 50 to 65°C, a hydroxyl number of 35 to 60, an acid number of less than 10 and an inherent viscosity of 0.1 to 0.25.

The semi-crystalline polyester component, in addition to the residues specified hereinabove, may contain minor amounts, e.g., up to 10 mole percent based upon the total monomer residues of the polyester, of other diacid and diol residues such as the residues of ethylene glycol, propylene glycol, 1,3-propanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, 1,3-butanediol, thiodiethanol, 1,2-, 1,3- and 1,4-cyclohexanedimethanol, 2,2,4,4-tetramethyl-1,3-cyclobutanediol, 1,4-xylylenediol and residues of succinic, glutaric, adipic, azelaic, sebacic, fumaric, maleic, itaconic, phthalic and/or isophthalic acids. However, the semi-crystalline polyester normally consists essentially of residues of (a) terephthalic acid (b) 1,4-cyclohexanedicarboxylic acid, 1,3-cyclohexanedicarboxylic acid, adipic acid or a mixture thereof and (c) one or more diol residues having the formula -O-(CH₂)ₙ-O-. The 1,3- and 1,4-cyclohexane-dicarboxylic acid or the dialkyl esters thereof used in the preparation of the polyesters may be the trans isomer, the cis isomer or a mixture of such isomers. Preferably, the cis:trans ratio is in the range of 30:70 to 70:30.

The semi-crystalline polyester component of our compositions preferably has a Tg of less than 30°C, e.g., 0 to 30°C, a hydroxyl number of 30 to 80, an inherent viscosity of 0.1 to 0.5, a melting range of 90 to 140°C and a number average molecular weight of 2000 to 6000. The heat of fusion (second heating cycle of DSC) of the preferred semi-crystalline polyesters is greater than 8 cal/g-°C, e.g., from 8 to 15 cal/g-°C. Semi-crystalline polyesters are those that exhibit an endothermic transition on a differential scanning calorimetry (DSC) scan from low to high temperature. Such a transition also is referred to as melting, a destruction of the orderly arranged molecular structure. The preferred semi-crystalline polyesters comprise (1) diacid residues consisting essentially of 85 to 95 mole percent terephthalic acid residues and 5 to 15 mole percent 1,3-cyclohexanedicarboxylic or 1,4-cyclohexanedicarboxylic acid residues, preferably having a trans isomer content of 35 to 65 mole percent and (2) diol residues consisting essentially of residues having the formula -O-(CH₂)ₙ-O- wherein n is 6 to 12, especially 1,6-hexanediol.

The relative amounts of the amorphous polyester and the semi-crystalline polyester can be varied substantially depending on a number of factors such as the properties and characteristics of the particular amorphous polyester and semi-crystalline polyester employed, the cross-linking agent and the amount thereof being used, the degree of pigment loading, the properties required of the coatings to be prepared from the compositions, etc. As provided above, the compositions of this invention comprise a blend of 10 to 90 weight percent of the amorphous polyester and 90 to 10 weight percent of the semi-crystalline polyester. The blend of polymers containing free hydroxy groups provided by this invention preferably is comprised of 50 to 80 weight percent of the amorphous polyester and 20 to 50 weight percent of the semi-crystalline polyester.

The blocked polyisocyanate compounds of the compositions of this invention are known compounds and can be obtained from commercial sources or may be prepared according to published procedures. Upon being heated to cure coatings of the compositions, the compounds are unblocked and the isocyanate groups react with hydroxy groups present on the amorphous and semi-crystalline polyesters to cross-link the polymer chains and thus cure the compositions to form tough coatings. Examples of the blocked polyisocyanate cross-linking component include those which are based on isophorone diisocyanate blocked with ε-caprolactam, commercially available as Hüls B1530®, Ruco NI-2® and Cargil® 2400, or toluene 2,4-diisocyanate blocked with ε-caprolactam, commercially available as Cargill 2450®, and phenol-blocked hexamethylene diisocyanate.

The most readily-available, and thus the preferred, blocked polyisocyanate cross-linking agents or compounds are those commonly referred to as ε-caprolactam-blocked isophorone diisocyanate, e.g., those described in U.S. Patents 3,822,240, 4,150,211 and 4,212,962. However, the products marketed as ε-caprolactam-blocked isophorone diisocyanate may consist primarily of the blocked, difunctional, monomeric isophorone diisocyanate, i.e., a mixture of the cis and trans isomers of 3-isocyanatomethyl-3,5,5-trimethylcyclohexylisocyanate, the blocked, difunctional dimer thereof, the blocked, trifunctional trimer thereof or a mixture of the monomeric, dimeric and/or trimeric forms. For example, the blocked polyisocyanate compound used as the cross-linking agent may be a mixture consisting primarily of the ε-caprolactam-blocked, difunctional, monomeric isophorone diisocyanate and the ε-caprolactam-blocked, trifunctional trimer of isophorone diisocyanate. The description herein of the cross-linking agents as "polyisocyanates" refers to compounds which contain at least two isocyanato groups which are blocked with, i.e., reacted with, another compound, e.g., ε-caprolactam. The reaction of the isocyanato groups with the blocking compound is reversible at elevated temperatures, e.g., 150°C and above, at which temperature the isocyanato groups are available to react with the hydroxyl groups present on the amorphous polyester and the semi-crystalline polyester to form urethane linkages.

The amount of the blocked diisocyanate cross-linking compound present in the compositions of our invention can be varied depending on several factors such as those mentioned hereinabove relative to the amounts of amorphous polyester and semi-crystalline polyester utilized. Typically, the amount of cross-linking compound which will effectively cross-link the hydroxy-containing polymers to produce coatings having a good combination of properties is in the range of 5 to 30 weight percent, preferably 15 to 25 weight percent, based on the total weight of the amorphous polyester, the semi-crystalline polyester and the cross-linking compound.

The powder coating compositions of our invention may be prepared from the compositions described herein by dry-mixing and then melt-blending the amorphous polyester, the semi-crystalline polyester and the blocked polyisocyanate compound, along with other additives commonly used in powder coatings, and then grinding the solidified blend to a particle size, e.g., an average particle size in the range of 10 to 300 µm, suitable for producing powder coatings. For example, the ingredients of the powder coating composition may be dry blended and then melt blended in a Brabender extruder at 90 to 130°C, granulated and finally ground. The melt blending should be carried out at a temperature sufficiently low to prevent the unblocking of the polyisocyanate cross-linking compound and thus avoid premature cross-linking. To minimize the exposure of the blocked polyisocyanate to elevated temperatures, the amorphous and semi-crystalline polyesters may be blended prior to the incorporation therein of the blocked polyisocyanate compound.

Typical of the additives which may be present in the powder coating compositions include benzoin, used to reduce entrapped air or volatiles, flow aids or flow control agents which aid the formation of a smooth, glossy surface, catalysts to promote the cross-linking reaction between the isocyanate groups of the cross-linking agent and the hydroxyl groups on the polymers, stabilizers, pigments and dyes. Although it is possible to cure or cross-link the composition without the use of a catalyst, it is usually desirable to employ a catalyst to aid the cross-linking reaction, e.g., in an amount of 0.05 to 2.0 weight percent cross-linking catalyst based on the total weight of the amorphous and semi-crystalline polyesters and the cross-linking agent. Suitable catalysts for promoting the cross-linking include organo-tin compounds such as dibutyltin dilaurate, dibutyltin dimaleate, dibutyltin oxide, stannous octanoate and similar compounds.

The powder coating compositions preferably contain a flow aid, also referred to as flow control or leveling agents, to enhance the surface appearance of cured coatings of the powder coating compositions. Such flow aids typically comprise acrylic polymers and are available from several suppliers, e.g., Modaflow from Monsanto Company and Acronal from BASF. Other flow control agents which may be used include Modarez MFP available from Synthron, EX 486 available from Troy Chemical, BYK 360P available from BYK Mallinkrodt and Perenol F-30-P available from Henkel. A specific flow aid is an acrylic polymer having a molecular weight of 17,000 and containing 60 mole percent 2-ethylhexyl methacrylate residues and 40 mole percent ethyl acrylate residues. The amount of flow aid present may be in the range of 0.5 to 4.0 weight percent, based on the total weight of the amorphous and semi-crystalline polyesters and the cross-linking agent.

The powder coating compositions may be deposited on various metallic and non-metallic substrates by known techniques for powder deposition such as by means of a powder gun, by electrostatic deposition or by deposition from a fluidized bed. In fluidized bed sintering, a preheated article is immersed into a suspension of the powder coating in air. The particle size of the powder coating composition normally is in the range of 60 to 300 µm, preferably 15 to 74 µm. The powder is maintained in suspension by passing air through a porous bottom of the fluidized bed chamber. The articles to be coated are preheated to about 250 to 400°F (about 121 to 205°C) and then brought into contact with the fluidized bed of the powder coating composition. The contact time depends on the thickness of the coating that is to be produced and typically is from 1 to 12 seconds. The temperature of the substrate being coated causes the powder to flow and thus fuse together to form a smooth, uniform, continuous, uncratered coating. The temperature of the preheated article also affects cross-linking of the coating composition and results in the formation of a tough coating having a good combination of properties. Coatings having a thickness between 200 and 500 µm may be produced by this method.

The compositions also may be applied using an electrostatic process wherein a powder coating composition having a particle size of less than 100 microns, preferably about 15 to 50 µm, is blown by means of compressed air into an applicator in which it is charged with a voltage of 30 to 100 kV by high-voltage direct current. The charged particles then are sprayed onto the grounded article to be coated to which the particles adhere due to the electrical charge thereof. The coated article is heated to melt and cure the powder particles. Coating of 40 to 120 µm thickness may be obtained.

Another method of applying the powder coating compositions is the electrostatic fluidized bed process which is a combination of the two methods described above. For example, annular or partially annular electrodes are mounted over a fluidized bed so as to produce an electrostatic charge such as 50 to 100 kV. The article to be coated, either heated, e.g., 250 to 400°F (121 to 205°C), or cold, is exposed briefly to the fluidized powder. The coated article then can be heated to effect cross-linking if the article was not preheated to a temperature sufficiently high to cure the coating upon contact of the coating particles with the article.

The powder coating compositions of this invention may be used to coat articles of various shapes and sizes constructed of heat-resistant materials such as glass, ceramic and various metal materials. The compositions are especially useful for producing coatings on articles constructed of metals and metal alloys, particularly steel articles.

The compositions and coatings of our invention are further illustrated by the following examples. The inherent viscosities (I.V.; dl/g) referred to herein were measured at 25°C using 0.5 g polymer per 100 mL of a solvent consisting of 60 parts by weight phenol and 40 parts by weight tetrachloroethane. Melt viscosities (Pa.s or poise) were determined using an ICI melt viscometer according to ASTM D4287-83. Acid and hydroxyl numbers were determined by titration and are reported herein as mg of KOH consumed for each gram of polymer. The glass transition temperatures (Tg) and the melting temperatures (Tm) were determined by differential scanning calorimetry (DSC) on the second heating cycle at a scanning rate of 20°C per minute after the sample was heated to melt and quenched to below the Tg of the polymer. Tg values are reported as the midpoint of the transition and Tm at peaks of transitions. The weight average molecular weight (Mw) and number average molecular weight (Mn) were determined by gel permeation chromatography in tetrahydrofuran (THF) using a polystyrene standard and a UV detector.

Coatings were prepared on 7.62 cm by 22.86 cm panels of 24-gauge, polished, cold roll steel, the surface of which has been zinc phosphated (Bonderite 37, The Parker Company). Impact strengths were determined using an impact tester (Gardner Laboratory, Inc.) according to ASTM D2794-84. A weight with a 1.6 cm diameter, hemispherical nose was dropped within a slide tube from a specified height to drive into the front (coated face) or back of the panel. The highest impact which did not crack the coating was recorded in inch-pounds, front and reverse. The 20° and 60° gloss values were measured using a multi-angle, analog laboratory glossmeter.

The solvent resistance of the coatings was determined by a methyl ethyl ketone (MEK) rub procedure in which coated panels were rubbed with a two-pound ball peen hammer wrapped with cheese cloth approximately 0.5 inch thick. The cloth was wetted with MEK every 50 double strokes. The rubbing was continued until bare metal is observed or until 200 double rubs are completed. The result of each MEK rub procedure is reported as the number of double rubs required for the observation of bare metal or 200, whichever is greater.

The flexibility of the coatings was determined in accordance with ASTM 4145-83 at ambient temperature by bending or folding a coated panel back against itself, using a hydraulic jack pressurized to 137.9 mega pascals (MPa), until the apex of the bend is as flat as can be reasonably achieved. This initial bend is referred to as OT meaning that there is nothing (zero thicknesses) between the bent portions of the panel. The bend is examined using a 10X magnifying glass and, if fractures of the coating are observed, the panel is bent a second time (1T) to form a three-layer sandwich. The second bend is inspected for coating fracture and this procedure is repeated, forming 4-, 5-, 6-, etc. layer sandwiches, until a bend exhibits no fracture of the coating. The result of each bend test is the minimum thickness (minimum T-bend) of the bend which does not give any fractures of the coating.

### EXAMPLE 1

Terephthalic acid (2092.8 g, 12.60 mol), 1,4-cyclohexanedicarboxylic acid (cis:trans = about 60:40, 114.2 g, 0.66 mol), and butanestannoic acid (FASCAT 4100, 3.5 g) were added to a melt of 1,6-hexane-diol (1797 g, 15.20 mol) in a 5 L, 3-necked, round-bottom flask. The contents of the flask were swept with 28.32 l/h (1.0 standard cubic feet per hour (scfh)) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.224, an ICI melt viscosity at 200°C of 0.33 Pa.s (3.3 poise) a hydroxyl number of 42.5 and an acid number of 2.3. Differential scanning calorimetry showed a melting point at 135°C and a heat of fusion of 10.9 cal/g. No temperature of crystallization was observed. The crystallization half time from the melt at 95°C was 11 seconds and at 60°C was too fast to observe. The polyester had a weight average molecular weight of 9027 and a number average molecular weight of 3666 (Mw/Mn = 2.5).

### EXAMPLE 2

A powder coating composition was prepared from the following materials:
- 288.0 g: Polyester of Example 1;
- 672.0 g: Amorphous polyester - Cargill 3000®;
- 240.0 g: Caprolactam-blocked isophorone polyisocyanate (Hüls B1530)®;
- 12.0 g: Dibutyltin dilaurate;
- 12.0 g: Benzoin;
- 18.0 g: Modaflow flow control agent; and
- 600.0 g: Titanium dioxide.

The above materials were mixed in a Henschel mixer for 15 to 30 seconds and blended in a Buss extruder with an 11D barrel design at a screw speed of 80 revolutions per minute. The extruder temperature profile was: zone 1 = 135°C, zone 2 = 75°C, zone 3 = 25°C, die head = 93°. The cooled extrudate was ground in a Bantam mill to which a stream of liquid nitrogen was fed and classified through a 0.074 mm (200 mesh) screen on an Alpine sieve. The finely-divided, powder coating composition obtained had an average particle size of about 50 µm.

The powder coating composition prepared in Example 2 was applied electrostatically to one side of the 7.62 cm by 22.86 cm panels described hereinabove. The coatings were cured (cross-linked) by heating the coated panels at 177°C in an oven for 20 minutes. The cured coatings were about (2.2 mils) about 56 µm thick.

The coatings on the panels had both front and back impact strengths of >18.08 joules (160 inch-pounds) and 20° and 60° gloss values of 79 and 90, respectively, and a pencil hardness of 2H. The coated panels passed a 0.32 cm conical mandrel test and had a T-bend flexibility value of 0-T. The coating had excellent smoothness and gloss.

### EXAMPLE 3

Terephthalic acid (320.3 g, 1.928 mol), 1,4-cyclohexanedicarboxylic acid (cis:trans = about 60:40, 59.2 g, 0.334 mol), and butanestannoic acid (FASCAT 4100, 0.6 g) were added to a melt of 1,6-hexanediol (318.0, 2.691 mol) in a 1 L, 3-necked, round-bottom flask. The contents of the flask were swept with 28.32 l/h ( 1.0 standard cubic feet per hour (scfh)) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.206, an ICI melt viscosity at 200°C of 0.28 Pa.s (2.8 poise), a hydroxyl number of 48.0 and an acid number of 0.6. Differential scanning calorimetry showed a melting point at 121°C and a heat of fusion of 9.3 cal/g. The crystallization half time from the melt at 90°C was 43 seconds and at 60°C, 12 seconds. The polyester had a weight average molecular weight of 8888 and a number average molecular weight of 3375.

### EXAMPLE 4

A powder coating composition was prepared according to the procedure described in Example 2 from the following ingredients:
- 288.04 g: Polyester of Example 3;
- 672.0 g: Amorphous polyester - AZS 50;
- 240.0 g: Caprolactam-blocked isophorone diisocyanate (Hüls B1530);
- 12.9 g: Dibutyltin dilaurate;
- 12.0 g: Benzoin;
- 18.0 g: Modaflow flow control agent; and
- 600.0 g: Titanium dioxide.

Using the procedure of Example 2, panels were coated with this powder coating composition and the coatings were cured and evaluated. The coatings (2.2 mils thick) (56µm) had front and back impact strengths of >18.08 joules (160 inch-pounds), 20° and 60° gloss values of 79 and 90, respectively, and a pencil hardness of 2H. The coated panels passed a 0.32 cm conical mandrel test, passed 200 methyl ethyl ketone rubs and had a T-bend flexibility value of 0-T. The coating had excellent smoothness and gloss.

### EXAMPLE 5

Terephthalic acid (360.5 g, 2.17 mol), adipic acid (16.69 g, 0.114 mol) and butanestannoic acid (FASCAT 4100, 0.6 g) were added to a melt of 1,6-hexanediol (309.6 g, 2.62 mol) in a 1 L, 3-necked, round-bottom flask. The contents of the flask were swept with 28.32 l/h (1.0 standard cubic feet per hour (scfh)) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.191, an ICI melt viscosity at 200°C of 0.38 Pa.s (3.8 poise), a hydroxyl number of 51.0 and an acid number of 0.4. Differential scanning calorimetry showed a melting point at 139°C, a crystallization temperature of 39°C and a heat of fusion of 11.8 cal/g. The crystallization half time from the melt at 95°C was 25 seconds and at 60°C, less than 12 seconds. The polyester had a weight average molecular weight of 7679 and a number average molecular weight of 3564.

### EXAMPLE 6

A powder coating composition was prepared according to the procedure described in Example 2 from the following ingredients:
- 288.0 g: Polyester of Example 5;
- 672.0 g: Amorphous polyester - RUCOTE 107®;
- 240.0 g: Caprolactam-blocked isophorone diisocyanate (Hüls B1530),
- 12.0 g: Dibutyltin dilaurate;
- 12.0 g: Benzoin;
- 18.0 g: Modaflow flow control agent; and
- 600.0 g: Titanium dioxide.

Using the procedure of Example 2, panels were coated with this powder coating composition and the coatings were cured and evaluated. The coatings (1.8 mils) (45 µm thick) had front and back impact strengths of >18.08 joules (160 inch-pounds), 20° and 60° gloss values of 88 and 95, respectively, and a pencil hardness of B. The coated panels passed a 0.32 cm conical mandrel test and had a T-bend flexibility value of 0-T. The coating had excellent smoothness and gloss.

### EXAMPLE 7

Terephthalic acid (253.87 g, 1.523 mol), 1,4-cyclohexanedicarboxylic acid (cis:trans = about 60:40, 48.4 g, 0.27 mol), and butanestannoic acid (FASCAT 4100, 0.6 g) were added to a melt of 1,10-decanediol (369.9 g, 2.13 mol) in a 5 L, 3-necked, round-bottom flask. The contents of the flask were swept with (1.0 standard cubic feet per hour) 28.32 l/h nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.222, an ICI melt viscosity at 200°C of 0.24 Pa.s (2.4 poise), a hydroxyl number of 43.0 and an acid number of 0.2. Differential scanning calorimetry showed a melting point at 116°C and a heat of fusion of 15.1 cal/g. No crystallization temperature was observed. The crystallization half time from the melt at 95°C was 45 seconds and at 60°C, less than 12 seconds. The polyester had a weight average molecular weight of 9746 and a number average molecular weight of 4451.

### EXAMPLE 8

A powder coating composition was prepared from the ingredients listed below using the procedure of Example 2 except that the ingredients were blended in a ZSK 30 extruder at a screw speed of 200 revolutions per minute. The extruder temperature profile was: feed zone = 80°C, die zone = 90°C. The extrudate was cooled by a chill roll, granulated and pulverized as described in Example 2.
- 288.0 g: Polyester of Example 7;
- 672.0 g: Amorphous polyester - RUCOTE 107®;
- 240.0 g: Caprolactam-blocked isophorone diisocyanate (Hüls B1530)®;
- 12.0 g: Dibutyltin dilaurate;
- 12.0 g: Benzoin;
- 18.0 g: Modaflow flow control agent; and
- 600.0 g: Titanium dioxide.

Using the procedure of Example 2, panels were coated with this powder coating composition and the coatings were cured and evaluated. The coatings (2.4 mils) (60 µm thick) had front and back impact strengths of >18.08 joules (160 inch-pounds), 20° and 60° gloss values of 80 and 93, respectively, and a pencil hardness of F. The coated panels passed a 0.32 cm conical mandrel test and had a T-bend flexibility value of 0-T. The coating had excellent smoothness and gloss.

### EXAMPLE 9

Terephthalic acid (284.25 g, 1.711 mol), 1,4-cyclohexanedicarboxylic acid (16.0 g, 0.090 mol) and butanestannoic acid (FASCAT 4100®, 0.6 g) were added to a melt of 1,10-decanediol (370.6 g, 2.31 mol) in a 1 L, 3-necked, round-bottom flask. The contents of the flask were swept with 28.32 l/h (1.0 standard cubic feet per hour (scfh)) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.236, an ICI melt viscosity at 200°C of 0.24 Pa.s (2.4 poise), a hydroxyl number of 42.0 and an acid number of 0.2. Differential scanning calorimetry showed a melting point at 122°C and a heat of fusion of 16.0 cal/g. The crystallization half time from the melt at 95°C was 15 seconds and was too fast to measure at 60°C. The polyester had a weight average molecular weight of 9915 and a number average molecular weight of 4492.

### EXAMPLE 10

A powder coating composition was prepared according to the procedure described in Example 8 from the following ingredients:
- 288.0 g: Polyester of Example 9;
- 672.0 g: Amorphous polyester - RUCOTE 107®;
- 240.0 g: Caprolactam-blocked isophorone diisocyanate (Hüls B1530);
- 12.0 g: Dibutyltin dilaurate;
- 12.0 g: Benzoin;
- 18.0 g: Modaflow flow control agent; and
- 600.0 g: Titanium dioxide.

Using the procedure of Example 2, panels were coated with this powder coating composition and the coatings were cured and evaluated. The coatings (2.2 mils) (56 µm thick) had front and back impact strengths of >18.08 joules (160 inch-pounds), 20° and 60° gloss values of 74 and 92, respectively, and a pencil hardness of HB. The coated panels passed a 0.32 cm conical mandrel test and had a T-bend flexibility value of 0-T. The coating had excellent smoothness and gloss.

### COMPARATIVE EXAMPLE 1

Terephthalic acid (392.1 g, 2.360 mol) was added to an agitated mixture of butanestannoic acid (FASCAT 4100®, 0.6 g) in a melt (180°C) of 1,6-hexanediol (292.8 g, 2.478 mol) in a 1 L, 3-necked, round-bottom flask. The contents of the flask were swept with 28.32 l/h (1.0 standard cubic feet per hour (scfh)) nitrogen and heated to and maintained at 200°C for a period of 3 hours, at 210°C for 3 hours and at 220°C for 3 hours. The temperature then was raised to and maintained at 230°C for 6 hours after which the acid number of the polyester was less than 10. The molten polymer was poured into a syrup can where it was allowed to cool to a white solid. The polyester thus obtained had an I.V. of 0.34, an ICI melt viscosity at 2000 of 2.8 Pa.s (28 poise), a hydroxyl number of 18.8 and an acid number of 4. Differential scanning calorimetry showed a melting point at 150°C and a heat of fusion of 12.2 cal/g. The crystallization half time from the melt at 95°C was 10 seconds and was too fast to measure at 60°C. The polyester had a weight average molecular weight of 20,565 and a number average molecular weight of 4180.

This polyester has a good crystallization rate but the melting range is higher than is desired.

### COMPARATIVE EXAMPLE 2

A powder coating composition was prepared from the following materials:
- 84.0 g: Polyester of Comparative Example 1;
- 196.0 g: Amorphous polyester - AZS 50;
- 70.0 g: Caprolactam-blocked isophorone polyisocyanate (Hüls B1530);
- 7.0 g: Dibutyltin dilaurate;
- 3.5 g: Benzoin;
- 4.2 g: Modaflow flow control agent; and
- 175.0 g: Titanium dioxide.

The above materials were mixed in a Banbury mixer to a maximum temperature of 80°C for 5 minutes. The compounded, dough-like mixture was allowed to cool and then was granulated and pulverized in a Bantam mill to which a stream of liquid nitrogen was fed and classified through a 0.074 mm (200 mesh)screen on an Alpine sieve. The finely-divided, powder coating composition obtained had an average particle size of about 50 microns.

The powder coating composition thus prepared was applied electrostatically to one side of the 7.62 cm by 22.86 cm panels described hereinabove. The coatings were cured (cross-linked) by heating the coated panels at 177°C in an oven for 20 minutes. The cured coatings were about 2.1 mils (about 53.3 µm) thick.

The coatings on the panels had both front and back impact strengths of >18.08 joules (160 inch-pounds) and 20° and 60° gloss values of 15 and 62, respectively, and a pencil hardness of 2H. The coated panels passed a 0.32 cm conical mandrel test and had a T-bend flexibility value of 0-T. The coating was smooth but dull when compared to the coating obtained in Example 2.

### COMPARATIVE EXAMPLE 3

Terephthalic acid (393.3 g, 2.367 mol) was added to an agitated mixture of butanestannoic acid (FASCAT 4100®, 0.6 g) in a melt (180°C) of 1,6-hexanediol (279.0 g, 2.361 mol) and 2,2-dimethyl-1,3-propanediol (12.9 g, 0.124 mol) in a 1 L, 3-necked, round-bottom flask. The contents of the flask were swept with 28.32 l/h (1.0 standard cubic feet per hour (scfh)) nitrogen and heated to and maintained at 200°C for a period of 3 hours, at 210°C for 3 hours and at 220°C for 3 hours. The temperature then was raised to and maintained at 230°C until the acid number of the polyester was less than 10. The molten polymer was poured into a syrup can where it was allowed to cool to a white solid.

The polyester thus obtained had an I.V. of 0.356, an ICI melt viscosity at 200°C of 3.3 Pa.s (33 poise), a hydroxyl number of 16.3 and an acid number of 3.4. Differential scanning calorimetry showed a melting point at 143°C and a heat of fusion of 10.8 cal/g. The crystallization half time from the melt at 95°C was 20 seconds and was too fast to measure at 60°C. The polyester had a weight average molecular weight of 21,560 and a number average molecular weight of 4470.

This polyester has a good rate of crystallization but a melting range higher than is desired.

### COMPARATIVE EXAMPLE 4

A powder coating composition was prepared using the procedure described in Comparative Example 2 from the following materials:
- 84.0 g: Polyester of Comparative Example 3;
- 196.0 g: Amorphous polyester - AZS 50;
- 70.0 g: Caprolactam-blocked isophorone polyisocyanate (Hüls B1530);
- 7.0 g: Dibutyltin dilaurate;
- 3.5 g: Benzoin;
- 4.2 g: Modaflow flow control agent; and
- 175.0 g: Titanium dioxide.

Using the procedure set forth in Example 2, panels were coated with this powder coating composition and the coatings were cured and evaluated. The coatings on the panels had both front and back impact strengths of >18.08 joules (160 inch-pounds) and 20° and 60° gloss values of 30 and 74, respectively, a pencil hardness of 2H and passed a 0.32 cm conical mandrel test. The coating was smooth but dull when compared to the coating obtained in Example 2.

### COMPARATIVE EXAMPLE 5

Terephthalic acid (1977.8 g, 11.905 mol) was added to an agitated mixture of dibutyltin oxide (3.0 g) in a melt (185°C) of 1,6-hexanediol (1255.4 g, 10.625 mol) and 2,2-dimethyl-1,3-propanediol (195.3 g, 1.875 mol) in a 5 L, 3-necked, round-bottom flask. The contents of the flask were swept with 28.32 l/h (1.0 standard cubic feet per hour (scfh))nitrogen and heated to and maintained at 200°C for a period of 3 hours, at 210°C for 3 hours and at 220°C for 3 hours. The temperature then was raised to and maintained at 230°C until the acid number of the polyester was less than 10. The molten polymer was poured into a syrup can where it was allowed to cool to a white solid.

The polyester thus obtained had an I.V. of 0.33, an ICI melt viscosity at 200°C of 3.2 Pa.s (32 poise), a hydroxyl number of 12 and an acid number of 4.7. Differential scanning calorimetry showed a glass transition temperature of 0°C and a crystallization temperature on heating of 50°C with a heat of crystallization of 6.5 cal/g and a melting point at 126° with a heat of fusion of 7.8 cal/g. The majority of the heat of fusion derived from the heat of crystallization on the second heating cycle of the differential scanning calorimetry. The polymer, after quenching following the first heating cycle, has essentially no crystallinity, indicating a slow crystallization upon quenching. The crystallization half time from the melt was too fast to measure at 60°C. The polyester has a weight average molecular weight of 14,390 and a number average molecular weight of 5984.

This polyester has a satisfactory melting range but an unacceptably slow rate of crystallization.

### COMPARATIVE EXAMPLE 6

A powder coating composition was prepared using the procedure described in Comparative Example 2 from the following materials:
- 84.0 g: Polyester of Comparative Example 5;
- 196.0 g: Amorphous polyester - AZS 50;
- 70.0 g: Caprolactam-blocked isophorone polyisocyanate (Hüls B1530);
- 7.0 g: Dibutyltin dilaurate;
- 3.5 g: Benzoin;
- 4.2 g: Modaflow flow control agent; and
- 175.0 g: Titanium dioxide.

Using the procedure set forth in Example 2, panels were coated with this powder coating composition and the coatings were cured and evaluated. The coatings on the panels had both front and back impact strengths of >18.08 joules (160 inch-pounds) and 20° and 60° gloss values of 68 and 89, respectively, a pencil hardness of 2H and passed a 0.32 cm conical mandrel test.

## Claims

1. A thermosetting coating composition in the form of a powder comprising:
(1) a blend of polymers containing free hydroxy groups comprised of:
(A) 10 to 90 weight percent of an amorphous polyester having a glass transition temperature (Tg) of greater than 40°C, a hydroxyl number of 20 to 200 and an inherent viscosity of 0.1 to 0.5; and
(B) 90 to 10 weight percent of a semi-crystalline polyester having a Tg of less than 50°C, a hydroxyl number of 20 to 100, an inherent viscosity of 0.1 to 0.5, a melting temperature of 70 to 150°C, a number average molecular weight of 1500 to 10,000 and a heat of fusion of greater than 5 cal/g-°C and comprised of:
(i) diacid residues comprised of (a) 80 to 98 mole percent terephthalic acid and (b) 2 to 20 mole percent of 1,4-cyclohexane-dicarboxylic acid residues, 1,3-cyclohexanedicarboxylic acid residues, adipic acid residues or a mixture thereof; and
(ii) glycol residues comprised of at least 50 mole percent of residues having the formula -O-(CH₂)ₙ-O-wherein n is 4 to 12; and
(2) a cross-linking effective amount of a blocked polyisocyanate compound, the glass transition temperature (Tg) , the melting temperature (Tm) , the heat of fusion being determined by differential scanning calorimetry (DSC) on the second heating cycle ; the hydroxyl number being determined by titration and reported as mg KOH consumed per g polymer ; the inherent viscosity (I.V. dl/g) being measured at 25°C using 0.5 g polymer per 100 ml of a solvent consisting of 60 parts by weight of phenol and 40 parts per weight tetrachloroethane ; the number average molecular weight (Mn) being determined by gel permeation chromatography in tetrahydrofuran (THF) using a polystyrene standard and a UV detector;
the amorphous polyester exhibiting no trace of crystallisation or melting point as determined by differential scanning calorimetry (DSC) ; the semi-crystalline polyester exhibiting an endometric transition on a differential scanning calorimetry (DSC) scan from low to high temperature.

2. A thermosetting coating composition according to Claim 1 wherein the amorphous polyester has a Tg greater than 55°C, a hydroxyl number of 25 to 80, an acid number of not more than 20 and an inherent viscosity of 0.15 to 0.45.

3. A thermosetting coating composition according to Claim 1 wherein the semi-crystalline polyester has a Tg of less than 30°C, a melting temperature of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C.

4. A thermosetting coating composition according to Claim 1 wherein the blocked polyisocyanate compound is an ε-caprolactam-blocked isophorone diisocyanate compound or an ε-caprolactam-blocked 2,4-toluene diisocyanate compound.

5. A thermosetting coating composition according to Claim 1 or Claim 3 containing a cross-linking catalyst.

6. A thermosetting coating composition in the form of a powder comprising:
(1) a blend of polymers containing free hydroxy groups comprised of:
(A) 50 to 80 weight percent of an amorphous polyester having a glass transition temperature (Tg) of greater than 55°C, a hydroxyl number of 25 to 80, an acid number of not more than 20 and an inherent viscosity of 0.15 to 0.45 and comprised of:
(i) diacid residues of which at least 50 mole percent are terephthalic acid residues;
(ii) glycol residues of which at least 50 mole percent are 2,2-dimethyl1,3-propanediol residues; and
(iii) up to 10 mole percent, based on the total moles of (ii) and trimethylolpropane, of trimethylolpropane residues;
(B) 20 to 50 weight percent of a semi-crystalline polyester having a Tg of less than 30°C, a melting point of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C and comprised of:
(i) diacid residues consisting of 85 to 95 mole percent terephthalic acid residues and 5 to 15 mole percent 1,4-cyclohexanedicarboxylic acid residues; and
(ii) diol residues consisting essentially of residues having the formula -O-(CH₂)ₙ-O- wherein n is 6 to 12;
(2) 5 to 30 weight percent, based on the total weight of the amorphous polyester, the semi-crystalline polyester and the blocked polyisocyanate, of a blocked polyisocyanate compound, the glass transition temperature (Tg), the melting temperature(Tm), the heat of fusion, the hydroxyl number, the inherent viscosity (IV), the number average molecular weight (Mn) being measured as in Claim 1, the amorphous and semi-crystalline polyesters being defined as in Claim 1.

7. A thermosetting coating composition according to Claim 6 wherein the blocked polyisocyanate compound is an ε-caprolactam-blocked isophorone diisocyanate compound or an ε-caprolactam-blocked 2,4-toluene diisocyanate compound.

8. A thermosetting coating composition according to Claim 6 or Claim 7 containing 15 to 25 weight percent, based on the total weight of the amorphous and semi-crystalline polyesters and the blocked polyisocyanate, of a blocked polyisocyanate.

9. A thermosetting coating composition according to Claims 6 to 8 containing a cross-linking catalyst and a flow aid.

10. A thermosetting coating composition in the form of a powder comprising:
(1) a blend of polymers containing free hydroxy groups comprised of:
(A) 50 to 80 weight percent of an amorphous polyester having a glass transition temperature (Tg) of 50 to 65°C, a hydroxyl number of 35 to 60, an acid number of not more than 10 and an inherent viscosity of 0.10 to 0.25 and consisting essentially of terephthalic acid residues, 2,2-dimethyl-1,3-propanediol residues and up to 10 mole percent, based on the total moles of trimethylolpropane and 2,2-dimethyl-1,3-propanediol residues, of trimethylolpropane residues;
(B) as defined in Claim 6 ;
(2) 15 to 25 weight percent, based on the total weight of the amorphous polyester, the semi-crystalline polyester and the blocked polyisocyanate, of a blocked polyisocyanate compound selected from an ε-caprolactamblocked isophorone diisocyanate compound or ε-caprolactam-blocked 2,4 -toluene diisocyanate compound;
(3) an acrylic polymer flow aid; and
(4) a cross-linking catalyst selected from organo-tin compounds; the glass transition temperature (Tg), the melting temperature(Tm), the heat of fusion, the hydroxyl number, the inherent viscosity (IV), the number average molecular weight (Mn) being measured as in Claim 1, the amorphous and semi-crystalline polyesters being defined as in Claim 1.

11. A thermosetting coating composition according to Claim 10 which also contains benzoin and wherein the semi-crystalline polyester component is comprised of diacid residues consisting of 85 to 95 mole percent terephthalic acid residues and 5 to 15 mole percent 1,4-cyclohexanedicarboxylic acid residues and diol residues consisting of 1,6-hexanediol residues.

12. An article coated with the reaction product of a composition comprising:
(1) a blend of polymers containing free hydroxy groups comprised of (A) and (B) as defined in Claim 1 ; and
(2) a cross-linking effective amount of a blocked polyisocyanate compound.

13. An article according to Claim 12 constructed of a metal coated with the reaction product of a composition comprising:
(1) a blend of polymers containing free hydroxy groups comprised of (A) and (B) as defined in claim 6;
(2) 5 to 30 weight percent, based on the total weight of the amorphous polyester, the semi-crystalline polyester and the blocked isocyanate, of a blocked polyisocyanate compound.

14. A coated article according to Claim 13 wherein the article is constructed of steel

15. An article according to Claim 14 constructed of steel coated with the reaction product of a composition comprising (1) and (2) as defined in Claim 10 ;
said composition also containing an acrylic polymer flow aid and a cross-linking catalyst selected from organo-tin compounds.

16. A blend of polymers containing free hydroxyl groups suitable for use in coating compositions comprised of(A) and (B) as defined in Claims 1, 6 or 10.

17. A semi-crystalline polyester as defined in Claim 1 or in Claim 6.

## Patentansprüche

1. Hitzehärtbare Beschichtungsmasse in Form eines Pulvers mit:
(1) einer Mischung von Polymeren, die freie Hydroxygruppen aufweisen, aus:
(A) 10 - 90 Gew.-% eines amorphen Polyesters mit einer Glasübergangstemperatur (Tg) von größer als 40°C, einer Hydroxylzahl von 20 - 200 und einer Inherent-Viskosität von 0,1 - 0,5; und
(B) 90 - 10 Gew.-% eines semikristallinen Polyesters mit einer Tg-Temperatur von weniger als 50°C, einer Hydroxylzahl von 20 - 100, einer Inherent-Viskosität von 0,1 - 0,5, einer Schmelztemperatur von 70 - 150°C, einer durchschnittlichen Molekulargewichtszahl von 1500 - 10000 und einer Wärmefusion von größer als 5 Kal/g-°C und aufgebaut aus:
(i) Disäureresten, die bestehen (a) zu 80 - 98 Mol-% aus Terephthalsäure - und (b) 2 - 20 Mol-% aus 1,4-Cyclohexandicarbonsäureresten, 1,3-Cyclohexandicarbonsäureresten, Adipinsäureresten oder einer Mischung hiervon; und
(ii) Glykolresten, die zu mindestens 50 Mol-% bestehen aus Resten der Formel -O-(CH₂)ₙ-O-, worin n für 4 - 12 steht; und
(2) einer quervernetzenden, effektiven Menge einer blockierten Polyisocyanatverbindung,
wobei die Glasübergangstemperatur (Tg), die Schmelztemperatur (Tm) und die Fusionswärme durch Differential-Abtast-Kalorimetrie (DSC) beim zweiten Erhitzungszyklus bestimmt werden; wobei die Hydroxylzahl durch Titration bestimmt wird und angegeben wird als mg KOH, verbraucht pro g Polymer; wobei die Inherent-Viskosität (I.V. dl/g) bei 25°C gemessen wird unter Verwendung von 0,5 g Polymer pro 100 ml eines Lösungsmittels, bestehend zu 60 Gew.-Teilen aus Phenol und 40 Gew.-Teilen aus Tetrachloroethan; und wobei die durchschnittliche Molekulargewichtszahl (Mn) bestimmt wird durch Gel-Permeations-Chromatographie in Tetrahydrofuran (THF) unter Verwendung eines Polystyrol-Standards und eines UV-Detektors;
wobei ferner der amorphe Polyester keine Spur einer Kristallisation aufweist oder eines Schmelzpunktes, bestimmt durch Differential-Abtast-Kalorimetrie (DSC); und wobei der semi-kristalline Polyester einen endometrischen Übergang bei einem Abtasten durch Differential-Abtast-Kalorimetrie (DSC) von niedriger zu hoher Temperatur zeigt.

2. Hitzehärtbare Beschichtungsmasse nach Anspruch 1, in der der amorphe Polyester einen Tg-Wert von größer als 55°C, eine Hydroxylzahl von 25 - 80, eine Säurezahl von nicht größer als 20 und eine Inherent-Viskosität von 0,15 - 0,45 aufweist.

3. Hitzehärtbare Beschichtungsmasse nach Anspruch 1, in der der semikristalline Polyester einen Tg-Wert von weniger als 30°C aufweist, eine Schmelztemperatur von 90 - 140°C, eine Hydroxylzahl von 30 - 80, eine Inherent-Viskosität von 0,1 - 0,5, eine durchschnittliche Molekulargewichtszahl von 2000 - 6000 und eine Fusionswärme (zweiter Erhitzungszyklus der Differential-Abtast-Kalorimetrie) von größer als 8 Kal/g-°C.

4. Hitzehärtbare Beschichtungsmasse nach Anspruch 1, in der die blockierte Polyisocyanatverbindung eine ε-Caprolactamblockierte Isophorondiisocyanatverbindung oder eine ε-Caprolactam-blockierte 2,4-Toluoldiisocyanatverbindung ist.

5. Hitzehärtbare Beschichtungsmasse nach Anspruch 1 oder Anspruch 3 mit einem Quervernetzungs-Katalysator.

6. Hitzehärtbare Beschichtungsmasse in Form eines Pulvers mit:
(1) einer Mischung von Polymeren, die freie Hydroxygruppen aufweisen aus:
(A) 50 - 80 Gew.-% eines amorphen Polyesters mit einer Glasübergangstemperatur (Tg) von größer als 55°C, einer Hydroxylzahl von 25 - 80, einer Säurezahl von nicht größer als 20 und einer Inherent-Viskosität von 0,15 - 0,45, der aufgebaut ist aus:
(i) Disäureresten, von denen mindestens 50 Mol-% Terephthalsäurereste sind;
(ii) Glykolresten, von denen mindestens 50 Mol-% aus 2,2-Dimethyl-1,3-propandiolresten bestehen; und
(iii) bis zu 10 Mol-%, bezogen auf die Gesamtmole von (ii) und Trimethylolpropan, Trimethylolpropanreste;
(B) 20 - 50 Gew.-% eines semikristallinen Polyesters mit einem Tg-Wert von weniger als 30°C, einem Schmelzpunkt von 90 - 140°C, einer Hydroxylzahl von 30 - 80, einer Inherent-Viskosität von 0,1 - 0,5, einer durchschnittlichen Molekulargewichtszahl von 2000 - 6000 und einer Wärmefusion (zweiter Erhitzungszyklus der Differential-Abtast-Kalorimetrie) von größer als 8 Kal/g-°C, der aufgebaut ist aus:
(i) Disäureresten, die zu 85 - 95 Mol-% aus Terephthalsäureresten und zu 5 - 15 Mol-% aus 1,4-Cyclohexandicarbonsäureresten bestehen; und
(ii) Diolresten, die im wesentlichen aus Resten der Formel -O-(CH₂)ₙ-O- bestehen, worin n für eine Zahl von 6 - 12 steht;
(2) 5 - 30 Gew.-%, bezogen auf das Gesamtgewicht des amorphen Polyesters, des semikristallinen Polyesters und des blockierten Polyisocyanates, einer blockierten Polyisocyanatverbindung, wobei
die Glasübergangstemperatur (Tg), die Schmelztemperatur (Tm), die Wärmefusion, die Hydroxylzahl, die Inherent-Viskosität (I.V.), die durchschnittliche Molekulargewichtszahl (Mn) wie in Anspruch 1 beschrieben gemessen werden, und wobei die amorphen und semikristallinen Polyester wie in Anspruch 1 definiert sind.

7. Hitzehärtbare Beschichtungsmasse nach Anspruch 6, in der die blockierte Polyisocyanatverbindung eine ε-Caprolactamblockierte Isophorondiisocyanatverbindung oder eine ε-Caprolactam-blockierte 2,4-Toluoldiisocyanatverbindung ist.

8. Hitzehärtbare Beschichtungsmasse nach Anspruch 6 oder Anspruch 7, die 15 - 25 Gew.-%, bezogen auf das Gesamtgewicht aus amorphen und semikristallinen Polyester und des blockierten Polyisocyanates, eines blockierten Polyisocyanates enthält.

9. Hitzehärtbare Beschichtungsmasse nach Ansprüchen 6 - 8, die einen quervernetzenden Katalysator und ein Fließhilfsmittel enthält.

10. Hitzehärtbare Beschichtungsmasse in Form eines Pulvers mit:
(1) einer Mischung von Polymeren, die freie Hydroxygruppen aufweisen, bestehend aus:
(A) 50 - 80 Gew.-% eines amorphen Polyesters mit einer Glasübergangstemperatur (Tg) von 50 - 65°C, einer Hydroxylzahl von 35 - 60, einer Säurezahl von nicht mehr als 10 und einer Inherent-Viskosität von 0,10 - 0,25 und bestehend im wesentlichen aus Terephthalsäureresten, 2,2-Dimethyl-1,3-propandiolresten sowie bis zu 10 Mol-%, bezogen auf die Gesamtmole von Trimethylolpropan- und 2,2-Dimethyl-1,3-propandiolresten, Trimethylolpropanresten;
(B) wie in Anspruch 6 definiert;
(2) 15 - 25 Gew.-%, bezogen auf das Gesamtgewicht des amorphen Polyesters, des semikristallinen Polyesters und des blockierten Polyisocyanates, einer blockierten Polyisocyanatverbindung, ausgewählt aus einer ε-Caprolactam-blockierten Isophorandiisocyanatverbindung oder ε-Caprolactam-blockierten 2,4-Toluoldiisocyanatverbindung;
(3) einem acrylischen Polymer - Fließhilfsmittel; und
(4) einem quervernetzenden Katalysator, ausgewählt aus Organozinnverbindungen;
wobei die Glasübergangstemperatur (Tg), die Schmelztemperatur (Tm), die Wärmefusion, die Hydroxylzahl, die Inherent-Viskosität (I.V.), die durchschnittliche Molekulargewichtszahl (Mn) wie in Anspruch 1 angegeben gemessen werden und wobei die amorphen und semikristallinen Polyester wie in Anspruch 1 definiert sind.

11. Hitzehärtbare Beschichtungsmasse nach Anspruch 10, die ferner Benzoin enthält und in der die semikristalline Polyesterkomponente aufgebaut ist aus Disäureresten, die zu 85 - 95 Mol-% aus Terephthalsäureresten und zu 5 - 15 Mol-% aus 1,4-Cyclohexandicarbonsäureresten bestehen und wobei die Diolreste aus 1,6-Hexandiolresten bestehen.

12. Gegenstand, der mit dem Reaktionsprodukt einer Zusammensetzung aus:
(1) einer Mischung von Polymeren, die freie Hydroxylgruppen enthalten, mit (A) und (B) wie in Anspruch 1 definiert; und
(2) einer quervernetzenden effektiven Menge einer blockierten Polyisocyanatverbindung
beschichtet ist.

13. Gegenstand nach Anspruch 12, erhalten aus einem Metall, das beschichtet ist mit dem Reaktionsprodukt einer Zusammensetzung mit:
(1) einer Mischung aus Polymeren, die freie Hydroxylgruppen enthalten, mit (A) und (B) wie in Anspruch 6 definiert;
(2) 5 - 30 Gew.-%, bezogen auf das Gesamtgewicht des amorphen Polyesters, des semikristallinen Polyesters und des blockierten Isocyanates, einer blockierten Polyisocyanatverbindung.

14. Beschichteter Gegenstand nach Anspruch 13, der aus Stahl aufgebaut ist.

15. Gegenstand nach Anspruch 14, der aus Stahl aufgebaut ist, der mit dem Reaktionsprodukt einer Masse mit (1) und (2) gemäß Anspruch 10 beschichtet ist; wobei
die Masse ferner ein acrylisches Polymer-Fließhilfsmittel enthält sowie einen quervernetzenden Katalysator, der aus Organozinnverbindungen ausgewählt ist.

16. Mischung aus Polymeren, die freie Hydroxylgruppen enthalten, geeignet zur Verwendung in Beschichtungszusammensetzungen mit (A) und (B), wie in den Ansprüchen 1, 6 oder 10 definiert.

17. Semikristalliner Polyester wie in Anspruch 1 oder in Anspruch 6 definiert.

## Revendications

1. Composition de revêtement thermodurcissable sous la forme d'une poudre comprenant :
(1) un mélange de polymères contenant des groupes hydroxyle libres comprenant :
(A) 10 à 90% en poids d'un polyester amorphe ayant une température de transition vitreuse (Tv) supérieure à 40°C, un indice d'hydroxyle de 20 à 100 et une viscosité inhérente de 0,1 à 0,5, et
(B) 90 à 10% en poids d'un polyester semi-cristallin ayant une Tv inférieure à 50°C, un indice d'hydroxyle de 20 à 100, une viscosité inhérente de 0,1 à 0,5, un point de fusion de 70 à 150°C, un poids moléculaire moyen en nombre de 1500 à 10.000 et une chaleur de fusion supérieure à 5 cal/g°C, et comprenant :
(i) des résidus de diacides formés de (a) 80 à 98 moles pour-cent de résidus d'acide téréphtalique et (b) 2 à 20 moles pour-cent de résidus d'acide 1,4-cyclohexanedicarboxylique, de résidus d'acide 1,3-cyclohexanedicarboxylique, de résidus d'acide adipique ou un mélange de ces résidus, et
(ii) des résidus de diols comprenant au moins 50 moles pour-cent de résidus ayant pour formule -O-(CH₂)ₙ-O- où n est égal à 4 à 12, et
(2) une quantité efficace pour la réticulation d'un composé polyisocyanate séquencé, la température de transition vitreuse (Tv), la température de fusion (Tf) et la chaleur de fusion étant déterminées par calorimétrie à balayage différentiel (DSC) lors du second cycle de chauffage, l'indice d'hydroxyle étant déterminé par titration et rapporté en mg de KOH consommé par g de polymère, la viscosité inhérente (I.V. dl/g) étant mesurée à 25°C en utilisant 0,5 g de polymère par 100 ml d'un solvant constitué de 60 parties en poids de phénol et de 40 parties en poids de tétrachloréthane, le poids moléculaire moyen en nombre (Mn) étant déterminé par chromatographie par perméation de gel dans du tétrahydrofuranne (THF) en utilisant du polystyrène comme étalon interne et un détecteur UV,
le polyester amorphe ne présentant pas de cristallisation ni de point de fusion comme déterminé par calorimétrie à balayage différentiel (DSC) et le polyester semi-cristallin présentant une transition endométrique lors d'une calorimétrie à balayage différentiel (DSC) balayant entre basse et haute température.

2. Composition de revêtement thermodurcissable selon la revendication 1, dans laquelle le polyester amorphe a une température Tv supérieure à 55°C, un indice d'hydroxyle de 25 à 80, un indice d'acide non supérieur à 20 et une viscosité inhérente de 0,15 à 0,45.

3. Composition de revêtement thermodurcissable selon la revendication 1, dans laquelle le polyester semi-cristallin ayant une température Tv inférieure à 30°C, une température de fusion de 90 à 140°C, un indice d'hydroxyle de 30 à 80, une viscosité inhérente de 0,1 à 0,5, un poids moléculaire moyen en nombre de 2000 à 6000 et une chaleur de fusion (deuxième cycle de chauffage de calorimétrie à balayage différentiel) supérieure à 8 cal/g°C.

4. Composition de revêtement thermodurcissable selon la revendication 1, dans laquelle le composé polyisocyanate séquencé est un composé diisocyanate d'isophorone séquencé par du ε-caprolactame ou un composé diisocyanate de 2,4-toluène séquencé par du ε-caprolactame.

5. Composition de revêtement thermodurcissable selon la revendication 1 ou la revendication 3, contenant un catalyseur de réticulation.

6. Composition de revêtement thermodurcissable sous la forme d'une poudre comprenant :
(1) un mélange de polymères contenant des groupes hydroxyle libres comprenant :
(A) 50 à 80% en poids d'un polyester amorphe ayant une température de transition vitreuse (Tv) supérieure à 55°C, un indice hydroxyle de 25 à 80, un indice d'acide non supérieur à 20 et une viscosité inhérente de 0,15 à 0,45, et comprenant :
(i) des résidus de diacides dont au moins 50 pour-cent sont des résidus d'acide téréphtalique,
(ii) des résidus de glycols dont au moins 50 moles pour-cent sont des résidus de 2,2-diméthyl-1,3-propanediol, et
(iii) jusqu'à 10 moles pour-cent, sur base de la quantité de moles de (ii) et de triméthylolpropane, de résidus de triméthylolpropane,
(B) 20 à 50% en poids d'un polyester semi-cristallin ayant une température Tv inférieure à 30°C, un point de fusion de 90 à 140°C, un indice d'hydroxyle de 30 à 80, une viscosité inhérente de 0,1 à 0,5, un poids moléculaire moyen en nombre de 2000 à 6000 et une chaleur de fusion (deuxième cycle de chauffage de calorimétrie à balayage différentiel) supérieure à 8 cal/g°C, et comprenant :
(i) des résidus de diacides formés de 85 à 95 moles pour-cent de résidus d'acide téréphtalique et de 5 à 15 moles pour-cent de résidus d'acide 1,4-cyclohexane dicarboxylique, et
(ii) des résidus de diols constitués essentiellement de résidus ayant pour formule -O-(CH₂)ₙ-O- où n est égal à 6 à 12, et
(2) 5 à 30% en poids, sur base du poids total du polyester amorphe, du polyester semi-cristallin et du polyiisocyanate séquencé, d'un composé polyisocyanate séquencé, la température de transition vitreuse (Tv), la température de fusion (Tf), la chaleur de fusion, l'indice d'hydroxyle, la viscosité inhérente (IV) et le poids moléculaire moyen en nombre (Mn) étant mesurés selon la revendication 1, les polyesters amorphe et semi-cristallin étant définis selon la revendication 1.

7. Composition de revêtement thermodurcissable selon la revendication 6, dans laquelle le composé polyisocyanate séquencé est un composé diisocyanate d'isophorone séquencé par du ε-caprolactame ou un composé diisocyanate de 2,4-toluène séquencé par du ε-caprolactame.

8. Composition de revêtement thermodurcissable selon la revendication 6 ou 7 contenant 15 à 20% en poids, sur base du poids total des polyesters amorphe et semi-cristallin et du polyisocyanate séquencé, d'un polyisocyanate séquencé.

9. Composition de revêtement thermodurcissable selon la revendication 6 à 8 contenant un catalyseur de réticulation et une matière auxiliaire rhéologique.

10. Composition de revêtement thermodurcissable sous la forme d'une poudre contenant :
(1) un mélange de polymères contenant des groupes hydroxyle libres comprenant :
(A) 50 à 80% en poids d'un polyester amorphe ayant une température de transition vitreuse (Tv) de 50 à 65°C, un indice hydroxyle de 35 à 60, un indice d'acide non supérieur à 10 et une viscosité inhérente de 0,10 à 0,25, et constitué essentiellement de résidus d'acide téréphtalique, des résidus de 2,2-diméthyl-1,3-propanediol, et jusqu'à 10 moles pour-cent, sur base de la quantité des résidus de triméthylolpropane et des résidus de 2,2-diméthyl-1,3-propanediol, des résidus de triméthylolpropane,
(B) comme défini dans la revendication 6, et
(2) 15 à 25% en poids, sur base du poids total du polyester amorphe, du polyester semi-cristallin et du polyiisocyanate séquencé, d'un composé polyisocyanate séquencé choisi entre un composé diisocyanate d'isophorone séquencé par du ε-caprolactame ou un composé diisocyanate de 2,4-toluène séquencé par du ε-caprolactame,
(3) un agent auxiliaire rhéologique à base de polymère acrylique, et
(4) un catalyseur de réticulation choisi parmi les composés d'organo-étain,
la température de transition vitreuse (Tv), la température de fusion (Tf), la chaleur de fusion, l'indice d'hydroxyle, la viscosité inhérente (IV) et le poids moléculaire moyen en nombre (Mn) étant mesurés selon la revendication 1, les polyesters amorphe et semi-cristallin étant définis selon la revendication 1.

11. Composition de revêtement thermodurcissable selon la revendication 10, qui contient également de la benzoïne et dans laquelle le composant polyester semi-cristallin est composé de résidus de diacides constitués de 85 à 95 moles pour-cent de résidus d'acide téréphtalique et de 5 à 15 moles pour-cent de résidus d'acide 1,4-cyclohexanedicarboxylique et de résidus de diols constitués de résidus 1,6-hexanediol.

12. Article revêtu du produit réactionnel d'une composition comprenant :
(1) un mélange de polymères contenant des groupes hydroxyle libres constitués de (A) et de (B) selon la revendication 1, et
(2) une quantité efficace pour la réticulation d'un composé polyisocyanate séquencé.

13. Article selon la revendication 12 constitué d'un métal revêtu du produit réactionnel d'une composition comprenant :
(1) un mélange de polymères contenant des groupes hydroxyle libres constitués de (A) et (B) selon la revendication 6,
(2) 5 à 30 pour-cent en poids, sur base du poids total du polyester amorphe, du polyester semi-cristallin et de l'isocyanate séquencé, d'un composé polyisocyanate séquencé.

14. Article revêtu selon la revendication 13, dans lequel l'article est constitué d'acier.

15. Article selon la revendication 14 constitué d'acier revêtu du produit réactionnel d'une composition comprenant (1) et (2) selon la revendication 10, ladite composition contenant également une matière auxiliaire rhéologique à base de polymère acrylique et un catalyseur de réticulation choisi parmi les composés d'organo-étain.

16. Mélange de polymères contenant des groupes hydroxyle libres convenant pour être utilisés dans des compositions de revêtement constituées de (A) et de (B) selon les revendications 1, 6 ou 10.

17. Polyester semi-cristallin selon la revendication 1 ou 6.
